# EUROPÄISCHE PATENTSCHRIFT

(11) **EP 1 113 209 B1**
(45) Veröffentlichungstag und Bekanntmachung des Hinweises auf die Patenterteilung: **20.07.2005**
(21) Anmeldenummer: 00122566.3
(22) Anmeldetag: 17.10.2000
(51) Int. Cl.: F16L 33/02

(54) **Schlauchdrahtklemmanordnung**
Hose clip
Collier de serrage

(30) Priorität: 31.12.1999 DE 29923062 U
(43) Veröffentlichungstag der Anmeldung: 04.07.2001
(73) Patentinhaber: Eugster/Frismag AG, 8590 Romanshorn (CH)
(72) Erfinder: Fischer, Daniel, 8590 Romanshorn (CH)
(74) Vertreter: Schubert, Siegmar, Dipl.-Ing.

(56) Entgegenhaltungen:
- DE-B- 2 834 009
- DE-B- 2 856 365
- DE-C- 3 809 849
- FR-A- 1 240 217
- GB-A- 2 207 184

## Beschreibung

Die Erfindung betrifft eine Schlauchdrahtklemmenanordnung nach dem Oberbegriff des Anspruchs 1.

Bekannt sind Schlauchdrahtklemmenaus schraubenlinienförmigern federnden Draht, der an wenigstens einem Endabschnitt und an einem weiteren Abschnitt nach außen abgewinkelt ist, beispielsweise zum Anschluß von Schläuchen in Haushaltsmaschinen und/oder an Haushaltsmaschinen in einem verhältnismäßig niedrigen Druckbereich bis typisch 8 bar. Eine solche Schlauchdrahtklemme hat, wenn sie nicht aufgeklemmt ist, einen etwas geringeren lichten Durchmesser als der Außendurchmesser des Schlauches, den sie beispielsweise auf einem Anschlußnippel festklemmen soll. Zur Montage des Schlauchs wird die Drahtanschlußklemme zunächst auf den Schlauch geschoben, wobei der Schlauch auf den Anschlußnippel gesetzt wird. Um den Schlauch auf dem Anschlußnippel festzuklemmen, werden die abgewinkelten Abschnitte der Schlauchdrahtklemme zusammengedrückt, wodurch sich die Schlauchdrahtklemme öffnet, d.h. ihr lichter Durchmesser wird vergrößert. So läßt sie sich auf den Schlauch im Bereich des Anschlußmittels positionieren. In der richtigen Position werden die abgewinkelten Abschnitte der Schlauchdrahtklemme freigegeben, wodurch sich diese zusammenzieht und den Schlauch auf dem Anschlußnippel kraftschlüssig festhält. - Ein Nachteil dieser Schlauchdrahtklemme besteht darin, daß bei höherem Druck, also beispielsweise größer als 8 bar, die Schlauchdrahtklemme durch den Druck in dem Schlauch entgegen der Federwirkung des schraubenlinienförmig gebogenen Drahtes aufgeweitet werden kann, wodurch die Anschlußstelle undicht wird und sich der Schlauch sogar von dem Anschlußnippel lösen kann.

Diese Nachteile werden bei einer anderen formschlüssigen Schlauchdrahtklemmenart vermieden, bei der Ösen mit einer Preßzange zusammengedrückt werden. Diese bei der Montage irreversibel deformierte Schlauchdrahtklemme kann im Servicefall nicht mehr gelöst werden; deswegen ist es zum Beispiel erforderlich, diese aufzuschneiden und durch eine neue Schlauchdrahtklemme zu ersetzen. Abgesehen von dem damit verbundenen Materialbedarf ist nachteilig, daß für die Montage der Schlauchdrahtklemme mit einer Preßzange ein großer freier Hantierungsbereich erforderlich ist.

Aus der FR-A-1 240 217, insbesondere Fig. 10 - 12, ist eine Schlauchdrahtklemmenanordnung mit einer Schlauchdrahtklemme aus schraubenlinienförmigem federnden Draht bekannt, der an wenigstens einem Endabschnitt (j) sowie an einem weiteren Abschnitt (h) nach außen annähernd radial oder in Umfangsrichtung abgewinkelt ist. Ein Sicherungsblech (C) mit zwei im Abstand zueinander angeordneten Ausschnitten (d, k) ist lösbar, d.h. schwenkbar, an der Schlauchdrahtklemme angebracht, dergestalt, daß je einer der beiden abgewinkelten Abschnitte (h, j) an je einem der beiden Ausschnitte (d, k) anliegt. Mehr im einzelnen verläuft die Schlauchdrahtklemme von einem ersten als Öse abgewinkelten Abschnitt (j) über einen ersten schraubenlinienförmigen Abschnitt, einen abgewinkelten und teilweise zurückgebogenen Verbindungsabschnitt als zweiten abgewinkelten Abschnitt (h) zu einem dritten abgewinkelten Abschnitt (j), der ebenfalls als Öse ausgebildet ist. Das Sicherungsblech (C) weist im Abstand zu Löchern (d), d.h. mindestens einem Ausschnitt an einem Endabschnitt Schlitze (k) als zweiten Ausschnitt in einem geschlossenen Abschnitt des Sicherungsblechs auf. Dabei liegen der erste, ösenförmig abgewinkelte Abschnitt (j) und der dritte, ösenförmig abgewinkelte Abschnitt (j) der Schlauchdrahtklemme an dem ersten Ausschnitt des Sicherungsblechs, d.h. schließen die beiden Löcher ein, und der zweite abgewinkelte Abschnitt (h) ragt durch einen der Schlitze (k) als zweiten Ausschnitt des Sicherungsblechs (C) und ist somit eingeklemmt. Jedoch liegen der erste abgewinkelte Abschnitt und der dritte abgewinkelte Abschnitt der von einer Haarnadelform ausgehenden Schlauchdrahtklemme nicht dicht aneinander, sondern sind weiter voneinander entfernt, als es der Breite des haarnadelähnlich umgebogenen Verbindungsabschnitts (h) entspricht. Weiterhin schließen die sich an den ersten, ösenförmig abgewinkelten Abschnitt und den dritten, ösenförmig abgewinkelten Abschnitt anschließenden Abschnitte der Schlauchdrahtklemme den Verbindungsabschnitt (h) der beiden Schenkel der Schlauchdrahtklemme zwischen sich ein, der auch als zweiter abgewinkelter Abschnitt bezeichnet wird. Deswegen ist der zweite Abschnitt bzw. Verbindungsabschnitt (h) im Verhältnis zu der Gesamtbreite der Schlauchdrahtklemme schmal, was ein direktes Erfassen des Verbindungsabschnittes erschwert. - Wie erwähnt sind der erste abgewinkelte Abschnitt und der dritte abgewinkelte Abschnitt ösenförmig, d.h. jeweils zu einer Öse geschlossen, die durch ein Loch in dem Sicherungsblech hindurchreicht, um eine scharnierähnliche Verbindung zu bilden. Somit kann die Schlauchdrahtklemme nicht einfach von dem Sicherungsblech entfernt werden.

Der Erfindung liegt die Aufgabe zugrunde, eine verbesserte Schlauchdrahlklemmenanordnung der eingangs genannten Bauart zu schaffen, die sich zum kraftschlüssigen Verbinden eines Schlauchs auf einem Anschlußnippel eignet und die dazu einfach, auch ohne Werkzeug montierbar, aber auch lösbar und wiederverwendbar ist und die geeignet ist, einem großen Druck in dem Schlauch bzw. dem Anschlußnippel ohne Undichtigkeit und Lösen des Schlauchs zuverlässig standzuhalten.

Insbesondere soll ein Sicherungsblech dieser Schlauchdrahtklemmenanordnung nicht nur lösbar, sondern von dieser abnehmbar sein.

Diese Aufgabe wird durch eine Schlauchdrahtklemmenanordnung mit den Merkmalen des Anspruchs 1 gelöst, zu der als wesentliches Element ein Sicherungsblech mit dem weiter unten spezifizierten offenen Ausschnitt gehört. Dieses weist zwei im Abstand zueinander angeordnete Ausschnitte auf, an denen je mindestens einer der abgewinkelten Abschnitte der Schlauchdrahtklemme im montierten Zustand der Schlauchdrahtklemmenanordnung anliegt. Mit dem Sicherungsblech wird erreicht, daß sich auch bei höherem Druck in dem Schlauch der schraubenlinienförmig gebogene federnde Draht nicht selbsttätig unerwünscht aufweiten kann, denn dessen abgewinkelte Abschnitte werden durch das Sicherungsblech daran gehindert, sich aufeinander zuzubewegen. Wenn es jedoch gewünscht ist, die Schlauchverbindung zu lösen, kann zunächst das Sicherungsblech von den abgewinkelten Abschnitten des schraubenlinienförmig gebogenen federnden Drahts entfernt werden, wonach sich diese abgewinkelten Abschnitte ohne weiteres manuell zusammendrücken lassen. Abgesehen von dem Aufbringen des Sicherungsblechs und dessen Entfernung von der Schlauchdrahtklemme wird diese also konventionell gehandhabt.

Damit das Sicherungsblech die Sicherungsfunktion erfüllen und die Schlauchdrahtklemme auch bei relativ hohem Druck in sicherer, kraftschlüssiger Verbindung mit dem Schlauch hält, ist das Sicherungsblech gemäß Anspruch 2 so zu dimensionieren, daß der Abstand zueinandergewandter Kanten der beiden Ausschnitte des Sicherungsblechs mindestens so groß ist wie der Abstand der beiden abgewinkelten Abschnitte der Schlauchdrahtklemme im entspannten Zustand.

Mit der Breite des Sicherungsblechs rechtwinklig zu dem genannten Abstand kann die richtige Positionierung der Schlauchdrahtklemme an dem Anschlußnippel vorgegeben und leicht kontrolliert werden.

Nach Anspruch 1 gehört zweckmäßig zu der Schlauchdrahtklemmenanordnung eine Schlauchdrahtklemme, die von dem ersten abgewinkelten Abschnitt über einen ersten schraubenlinienförmigen Abschnitt, einen abgewinkelten und teilweise zurückgebogenen, annähernd U-förmigen Verbindungsabschnitt als zweiten abgebogenen Abschnitt und einen zweiten schraubenlinienförmigen Abschnitt zu einem dritten abgewinkelten Abschnitt verläuft, wobei der erste abgewinkelte Abschnitt und der dritte abgewinkelte Abschnitt dicht aneinanderliegen und wobei zwischen zwei Schenkeln des zweiten abgewinkelten Abschnitts die beiden schraubenlinienförmigen Abschnitte des federnden Drahts liegen. Zu dieser Schlauchdrahtklemme gehört besonders vorteilhaft ein Sicherungsblech, welches als ersten Ausschnitt einen offenen Ausschnitt an einem Rand eines Endabschnitts aufweist und im Abstand zu diesem ein Loch als zweiten Ausschnitt in einem geschlossenen Abschnitt des Sicherungsblechs aufweist. Das Sicherungsblech kann dann einfach und zuverlässig in der Weise auf die auf dem Schlauch positionierte und den Schlauch festklemmende Schlauchdrahtklemme aufgebracht werden, daß das Sicherungsblech mit seinem offenen Ausschnitt an den ersten abgewinkelten Abschnitt und den dritten abgewinkelten Abschnitt der Schlauchdrahtklemme angehebelt und dann auf den abgewinkelten und teilweise zurückgebogenen, annähernd U-förmigen Verbindungsabschnitt geschwenkt wird, wobei dieser zweite abgewinkelte Abschnitt in das Loch des Sicherungsblechs einschnappt. Danach liegen der erste abgewinkelten Abschnitt und der dritte abgewinkelte Abschnitt der Schlauchdrahtklemme an dem ersten offenen Ausschnitt des Sicherungsblechs und der zweite abgewinkelte Abschnitt in dem Loch als zweitem Ausschnitt des Sicherungsblechs, so daß dieses unverlierbar eingeklemmt ist.

Ein Ausführungsbeispiel der Erfindung wird im folgenden anhand einer Zeichnung mit einer Figur erläutert, woraus weitere Merkmale, insbesondere hinsichtlich der Formgebung der Schlauchdrahtklemme und des Sicherungsblechs, deren Zusammenwirken sowie damit erreichte Vorteile hervorgehen. Es zeigt:

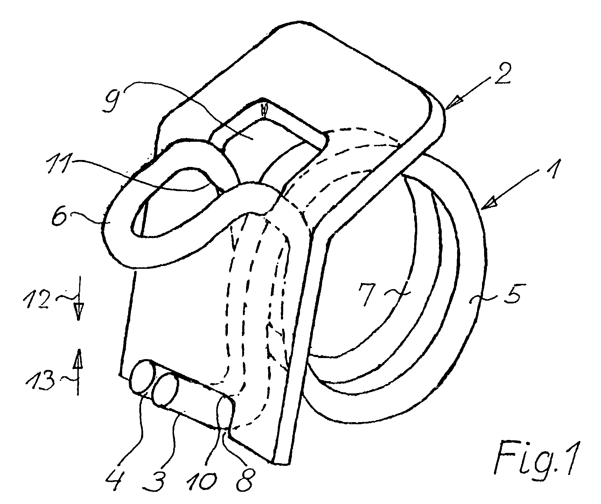

- Fig. 1: eine Schlauchdrahtklemme mit einem mit ihr lösbar verbundenen Sicherungsblech in einer schaubildlichen Ansicht.

In Fig. 1 ist mit 1 allgemein eine Schlauchdrahtklemme bezeichnet und mit 2 ein an ihr lösbar angebrachtes Sicherungsblech.

Die Schlauchdrahtklemme 1 umfaßt an ihrem einen Ende einen ersten abgewinkelten Abschnitt 3 und an ihrem anderen Ende einen eng daneben liegenden sogenannten dritten abgewinkelten Abschnitt 4. Von dem ersten abgewinkelten Abschnitt 3 ausgehend folgt ein erster schraubenlinienförmiger Abschnitt 5, der in einen Verbindungsabschnitt 6 übergeht, welcher einen sogenannten zweiten abgewinkelten Abschnitt bildet. Analog dazu verläuft von dem dritten abgebogenen Abschnitt 4 ein zweiter schraubenlinienförmiger Abschnitt 7 zu dem gemeinsamen Verbindungsabschnitt 6. Die Schlauchdrahtklemme 1 ist damit insgesamt so gebogen, daß die beiden schraubenlinienförmigen Abschnitte 5 und 7 im Bereich des Verbindungsabschnitts 6 von diesem umfaßt werden. Der Verbindungsabschnitt 6 ist im einzelnen, wie aus Fig. 1 ersichtlich, annähernd U-förmig geschlossen geformt, und zwar so, daß ein äußerer Teil zu dem ersten abgewinkelten Abschnitt 3 und dem dritten abgewinkelten Abschnitt 4 hin zurückgebogen ist.

Das sicherungsblech 2 ist - vor seiner Biegung - im wesentlichen rechteckförmig. Aus ihm ist an einem Rand ein erster, offener Ausschnitt 8 ausgeformt sowie im Abstand zu diesem in einem nicht bezeichneten geschlossenen Abschnitt ein annähernd rechteckiges Loch 9. Eine Kante 10 des ersten Abschnitts 8 ist am nächsten einer in Fig. 1 nur angedeuteten Kante 11 des rechteckförmigen Lochs 9 benachbart. Parallel zu und nahe der Kante 11 ist das Sicherungsblech 2 um einen stumpfen Winkel abgebogen. Diese gebogene Form hat unter anderem den Vorteil, daß sie annähernd an die Form der Schlauchdrahtklemme angepaßt und somit eine kompakte Einheit ergibt.

Die Schlauchdrahtklemme 1 wird zunächst auf einem nicht dargestellten Schlauch, der auf einem ebenfalls nicht gezeigten Anschlußnippel aufgeklemmt werden soll, aufgebracht, indem der erste abgebogene Abschnitt 3 und der dritte abgewinkelte Abschnitt 4 einerseits sowie der zweite abgebogene Abschnitt 6 andererseits in Richtung von Pfeilen 12,13 zusammengedrückt werden, wodurch sich der Innendurchmesser der schraubenlinienförmigen Abschnitte erweitert und die Schlauchdrahtklemme an der gewünschten Stelle positioniert werden kann. Diese Positionierung kann mit dem Sicherungsblech 2 kontrolliert werden, welches zur weiteren Montage mit seiner Kante 10 unten an den ersten abgewinkelten Abschnitt 3 und den dritten abgewinkelten Abschnitt 4 angelegt wird. Sodann wird das Sicherungsblech 2 in Fig. 1 nach rechts auf den zweiten abgewinkelten Abschnitt 6 aufgedrückt, so daß dieser in das Loch 9 gleitet, bis der Verbindungsabschnitt 6 in der in Fig. 1 dargestellten Lage an der Kante 11 des Lochs 9 anliegt.

Dabei kann infolge des Abstands der beiden Kanten 10 und 11 der Abstand zwischen dem ersten abgewinkelten Abschnitt 3 und dem dritten abgewinkelten Abschnitt 4 einerseits sowie dem zweiten abgewinkelten Abschnitt, d.h. Verbindungsabschnitt 6, andererseits größer sein als in dem Zustand der Schlauchdrahtklemme 1, in dem diese den Schlauch auf dem Anschlußnippel ohne Sicherungsblech andrückt. Somit ergibt das Sicherungsblech 2 eine Erhöhung des Kraftschlusses der Schlauchdrahtklemme 1.

Das Sicherungsblech kann einfach von der Schlauchdrahtklemme gelöst werden, indem das Sicherungsblech in Fig. 1 nach links zurückgeschwenkt wird, wobei der Verbindungsabschnitt 6 herausrutscht. Anschließend kann das Sicherungsblech von den abgewinkelten Abschnitten 3 und 4 abgenommen werden und die Schlauchdrahtklemme kann durch Zusammendrücken in Richtung der Pfeile 12,13 gelöst werden.

### Bezugszeichenliste

- 1.: Schlauchdrahtklemme
- 2.: Sicherungsblech
- 3.: 1. abgewinkelter Abschnitt
- 4.: 3. abgewinkelter Abschnitt
- 5.: 1. schraubenlinienförmiger Abschnitt
- 6.: Verbindungsabschnitt (2. abgewinkelter Abschnitt)
- 7.: 2. schraubenlinienförmiger Abschnitt
- 8.: 1. Ausschnitt (offen)
- 9.: Loch
- 10.: Kante
- 11.: " " "
- 12.: Pfeil
- 13.: " " "

## Patentansprüche

1. Schlauchdrahtklemmenanordnung mit einer Schlauchdrahtklemme (1) aus schraubenlinienförmigem federndem Draht, der an wenigstens einem Endabschnitt (3, 4) sowie an einem weiteren Abschnitt (6) nach außen annähernd radial oder in Umfangsrichtung abgewinkelt ist,
wobei ein Sicherungsblech (2) mit zwei im Abstand zueinander angeordneten Ausschnitten (8, 9) lösbar an der Schlauchdrahtklemme (1) angebracht ist, dergestalt, daß je einer der abgewinkelten Abschnitte (3, 4, 6) an je einem der beiden Ausschnitte (8, 9) anliegt, wobei die Schlauchdrahtklemme (1) von dem ersten abgewinkelten Abschnitt (3) über einen ersten schraubenlinienförmigen Abschnitt (5), einen abgewinkelten und teilweise zurückgebogenen Verbindungsabschnitt (6) als zweiten abgewinkelten Abschnitt und einen zweiten schraubenlinienförmigen Abschnitt (7) zu einem dritten abgewinkelten Abschnitt (4) verläuft, wobei das Sicherungsblech im Abstand zu einem (8) der Ausschnitte (8, 9) an einem Abschnitt ein Loch (9) als zweiten Ausschnitt in einem geschlossenen Abschnitt des Sicherungsblechs (2) aufweist, wobei der erste abgewinkelte Abschnitt (3) und der dritte abgewinkelte Abschnitt (4) der Schlauchdrahtklemme (1) an dem ersten Ausschnitt (8) des Sicherungsblechs (2) liegen und wobei der Verbindungsabschnitt (6) als zweiter abgewinkelter Abschnitt in dem Loch (9) als zweiten Ausschnitt des Sicherungsblechs (2) eingeklemmt ist,
**dadurch gekennzeichnet,**
**daß** der erste abgewinkelte Abschnitt (3) und der dritte abgewinkelte Abschnitt (4) dicht aneinanderliegen, daß zwischen zwei Schenkeln des zweiten abgewinkelten Abschnitts (6) die beiden schraubenlinienförmigen Abschnitte (5, 7) des federnden Drahts liegen und daß das Sicherungsblech (2) als ersten Ausschnitt (8) einen offenen Ausschnitt an einem Rand des Endabschnitts aufweist.

2. Schlauchdrahtklemmenanordnung nach Anspruch 1,
**dadurch gekennzeichnet,**
**daß** der Abstand zueinander gewandter Kanten (10, 11) der beiden Ausschnitte (8, 9) mindestens so groß ist wie der Abstand der abgewinkelten Abschnitte (3, 4, 6) der Schlauchdrahtklemme (1) im Klemmzustand ohne Sicherungsblech.

## Claims

1. Hose clip arrangement comprising a hose clip (1) of spiral-shaped flexible wire outwardly bent approximately radially or in circumferential direction at least at one end section (3, 4) and at a further section (6), wherein a protective plate (2) having two cutouts (8, 9) spaced relative to each other is removably attached to said hose clip (1) so that one of said bent sections each (3, 4, 6) rests against one of said cutouts each (8, 9), wherein said hose clip (1) extends from said first bent section (3) via a first spiral-shaped section (5), a bent and partly re-bent connecting section (6) as second bent section and a second spiral-shaped section (7) to a third bent section (4), wherein said protective plate includes, spaced relative to one (8) of said cutouts (8, 9), at one section a hole (9) as second cutout in a closed section of said protective plate (2), wherein said first bent section (3) and said third bent section (4) of said hose clip (1) rest against said first cutout (8) of said protective plate (2), and wherein said connecting section (6) is clamped as second bent section in hole (9) of said cutout of said protective plate (2), **characterized in that** said first bent section (3) and said third bent section (4) are disposed tightly next to each other, that between two legs of said second bent section (6) said two spiral-shaped sections (5, 7) of said flexible wire are disposed, and that said protective plate (2) includes, as a first cutout (8), an open cutout at one edge of said end section.

2. Hose clip arrangement according to claim 1, **characterized in that** the distance of edges (10, 11) facing each other of said two cutouts (8, 9) is at least as large as the distance of said bent sections (3, 4, 6) of said hose clip when clamped without protective plate.

## Revendications

1. Structure de serrage par fil métallique pour tuyau souple comportant une pince en fil métallique pour tuyau souple (1) constituée d'un fil métallique élastique sous forme hélicoïdale, qui au niveau d'au moins un tronçon d'extrémité (3, 4) ainsi qu'au niveau d'un autre tronçon (6), est coudé vers l'extérieur, à peu près radialement ou en direction circonférentielle, étant précisé qu'une plaque de sécurité (2) présentant deux découpes (8, 9) disposées à distance l'une de l'autre est mise en place, de façon amovible, sur la pince en fil métallique pour tuyau souple (1) d'une manière telle, que chacun des tronçons coudés (3, 4, 6) s'appuie contre une découpe respective parmi lesdites deux découpes (8, 9), que la pince en fil métallique pour tuyau souple (1), à partir du premier tronçon coudé (3), se développe, par un premier tronçon hélicoïdal (5), un tronçon de liaison (6) coudé et partiellement recourbé, constituant un deuxième tronçon coudé, et un deuxième tronçon hélicoïdal (7), jusqu'à un troisième tronçon coudé (4), que la plaque de sécurité présente, à distance de l'une (8) des découpes (8, 9) sur un tronçon, un trou (9) constituant la deuxième découpe, dans un tronçon fermé de la plaque de sécurité (2), que le premier tronçon coudé (3) et le troisième tronçon coudé (4) de la pince en fil métallique pour tuyau souple (1) sont situés au niveau de la première découpe (8) de la plaque de sécurité (2) et que le tronçon de liaison (6) constituant le deuxième tronçon coudé est coincé dans le trou (9) constituant la deuxième découpe de la plaque de sécurité (2), **caractérisée en ce que** le premier tronçon coudé (3) et le troisième tronçon coudé (4) s'appliquent étroitement l'un contre l'autre, **en ce que** les deux tronçons hélicoïdaux (5, 7) du fil métallique élastique sont situés entre deux branches du deuxième tronçon coudé (6) et **en ce que** la plaque de sécurité (2) présente, en tant que première découpe (8), une découpe ouverte sur un bord du tronçon d'extrémité.

2. Structure de serrage par fil métallique pour tuyau souple selon la revendication 1, **caractérisée en ce que** la distance entre des arêtes (10, 11), tournées l'une vers l'autre, des deux découpes (8, 9) est au moins aussi grande que la distance entre les tronçons coudés (3, 4, 6) de la pince en fil métallique pour tuyau souple (1) dans l'état de serrage sans plaque de sécurité.
